# EUROPÄISCHE PATENTANMELDUNG

(11) **EP 2 317 159 A1**
(43) Veröffentlichungstag der Anmeldung: **04.05.2011**
(21) Anmeldenummer: 10189533.2
(22) Anmeldetag: 28.10.2010
(51) Int. Cl.: F16B 25/00, F16B 35/06

(54) **Schraube insbesondere für zementgebundene Faserplatten**

(30) Priorität: 28.10.2009 DE 202009014561 U
(71) Anmelder: SPAX International GmbH & Co. KG, 58256 Ennepetal (DE)
(72) Erfinder: Langewiesche, Frank, 45549, Sprockhövel (DE)
(74) Vertreter: Patentanwälte Dr. Solf & Zapf

(57) **Zusammenfassung**

Die vorliegende Erfindung betrifft eine Schraube (1) zum Befestigen von Bauplatten, insbesondere zementgebundenen Faserplatten ohne Vorbohren. Die Schraube (1) besteht aus einem Schraubenschaft (2) mit einer einendigen Schraubenspitze (4) und einem anderendigen Schraubenkopf (6) mit einem Kraftangriff (8) für ein Drehwerkzeug. Der Schraubenkopf (6) weist ausgehend von dem Schraubenschaft (2) einen Einsenkabschnitt (10) mit einem zunehmenden, im Wesentlichen polygonalen Querschnitt auf.

## Beschreibung

Die vorliegende Erfindung betrifft eine Schraube zum Befestigen von Bauplatten, insbesondere zementgebundenen Faserplatten ohne Vorbohren, bestehend aus einem Schraubenschaft mit einer einendigen Schraubenspitze und einem anderendigen Schraubenkopf mit einem Kraftangriff für ein Drehwerkzeug.

Es ist bekannt, Bauplatten ohne Vorbohren an einer Unterkonstruktion aus Holz oder Metall zu befestigen, indem selbstschneidende bzw. gewindeformende Schrauben eingedreht werden. Dabei soll sich der Schraubenkopf möglichst ganz in die Bauplatte einsenken, um die Plattenfläche glatt verspachteln zu können. Das Versenken des Kopfes gelingt aber mit bekannten Schrauben vor allem bei sehr harten, zementgebundenen Faserplatten nicht vollständig und somit unbefriedigend.

Der Erfindung liegt die Aufgabe zu Grunde, eine Schraube der genannten Art zu schaffen, die speziell für eine Verwendung zum Verschrauben sehr harter, auch zementgebundener Bauplatten geeignet ist und dabei auch ein einfaches vollständiges Versenken des Schraubenkopfes in das Material der jeweiligen Bauplatte ermöglicht.

Erfindungsgemäß wird dies durch die Merkmale des unabhängigen Anspruchs 1 erreicht. Vorteilhafte Weiterbildungen der Erfindung sind in den abhängigen Ansprüchen und der folgenden Beschreibung enthalten.

Demnach ist erfindungsgemäß vorgesehen, dass der Schraubenkopf ausgehend von dem Schraubenschaft einen Einsenkabschnitt mit einem in axialer Richtung von dem Schraubenschaft weg zunehmenden, im Wesentlichen polygonalen Querschnitt bildet. Bevorzugt ist der Einsenkabschnitt im Anschluss an den Schraubenschaft umgekehrt pyramidenstumpfförmig ausgebildet, so dass die kleinere Endfläche des Pyramidenstumpfes mit der Endfläche des Schraubenschaftes zusammenfällt.. Durch diese erfindungsgemäße Ausgestaltung hat der Einsenkabschnitt seitliche Kanten, die derart schräg zur Schrauben-Längsachse geneigt verlaufen, dass sie beim Einschrauben als Fräskanten wirken, so dass sich der Schraubenkopf leichter auch in härteres Material einsenken lässt.

Anhand der Zeichnung und darin dargestellter, bevorzugter Ausführungsbeispiele soll die Erfindung im Folgenden genauer erläutert werden. Dabei zeigen:
- Fig. 1: eine Perspektivansicht einer erfindungsgemäßen Schraube in einer ersten Ausführungsform,
- Fig. 2: eine Seitenansicht der Schraube nach Fig. 1,
- Fig. 3: eine Draufsicht auf den Schraubenkopf in Pfeilrichtung III gemäß Fig. 2,
- Fig. 4: eine Perspektivansicht wie in Fig. 1 einer zweiten Ausführungsform der erfindungsgemäßen Schraube,
- Fig. 5: eine Seitenansicht der Schraube nach Fig. 4,
- Fig. 6: eine Draufsicht auf den Schraubenkopf in Pfeilrichtung VI gemäß Fig. 5,
- Fig. 7: einen Querschnitt durch den Schraubenkopf in der Schnittebene VII-VII in Fig. 5,
- Fig. 8: eine Schnittansicht ähnlich Fig. 7, allerdings vergrößert und in einer Ausführungsvariante,
- Fig. 9: eine Darstellung wie in Fig. 8 einer weiteren Ausführungsvariante,
- Fig. 10: eine vergrößerte Seitenansicht eines Teils des Schraubenkopfes in einer besonderen Ausgestaltung,
- Fig. 11: eine Teilansicht einer weiteren Ausführung einer erfindungsgemäßen Schraube,
- Fig. 12: eine Ansicht in Pfeilrichtung XII in Fig. 11,
- Fig. 13: eine Teilansicht einer weiteren Ausführung einer erfindungsgemäßen Schraube,
- Fig. 14: eine Ansicht in Pfeilrichtung XIV in Fig. 13,
- Fig. 15: eine Ansicht einer weiteren Ausführungsform einer erfindungsgemäßen Schraube,
- Fig. 16: eine Ansicht in Pfeilrichtung XVI in Fig. 15.

In den verschiedenen Figuren der Zeichnung sind gleiche Teile stets mit den gleichen Bezugszeichen versehen.

Eine erfindungsgemäße Schraube 1 besteht aus einem Schraubenschaft 2 mit einer einendigen Schraubenspitze 4 und einem anderendigen Schraubenkopf 6. Der Schraubenkopf 6 weist einen Kraftangriff 8 für ein nicht dargestelltes Drehwerkzeug auf.

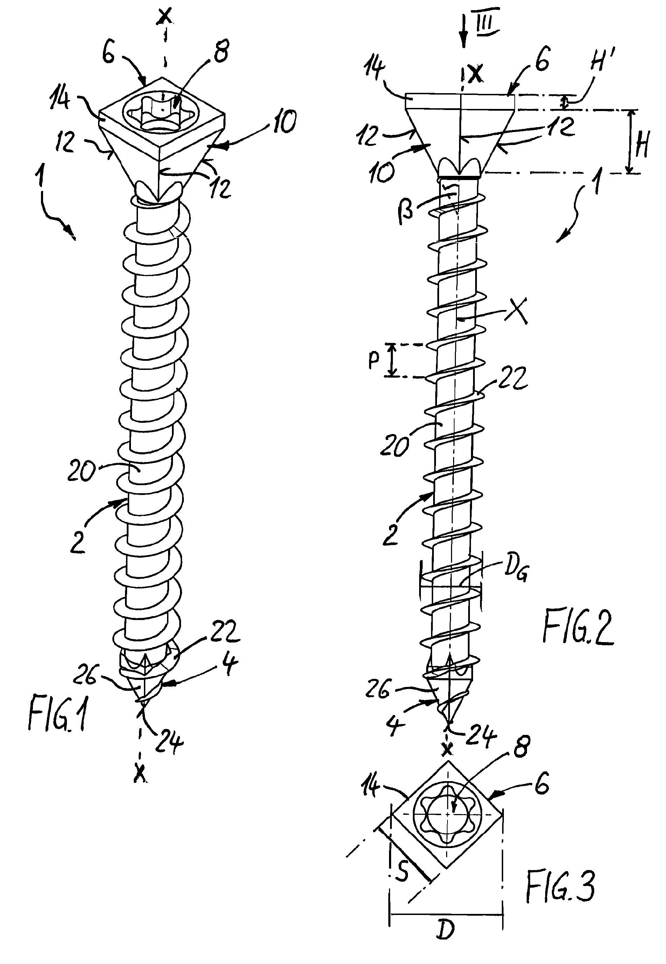

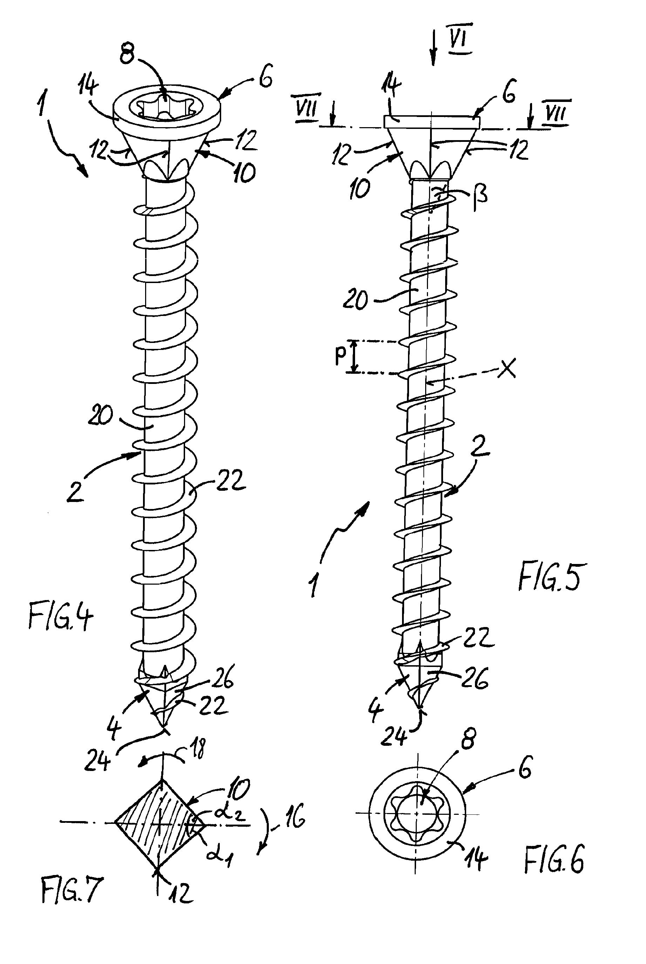

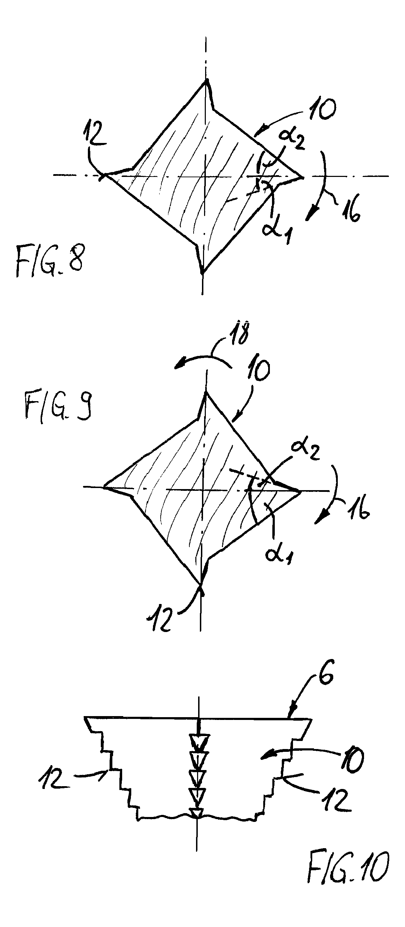

Erfindungsgemäß bildet der Schraubenkopf 6 einen sich an den Schraubenschaft 2 anschließenden Einsenkabschnitt 10 mit einem sich in axialer Richtung von dem Schraubenschaft 2 weg vergrößernden, polygonalen Querschnitt. Dabei stellt der polygonale Querschnitt eine Querschnittsfläche dar. Hierdurch ist in bevorzugter Ausgestaltung dieser Einsenkabschnitt 10 im Anschluss an den Schraubenschaft 2 umgekehrt pyramidenstumpfförmig ausgebildet. Der Einsenkabschnitt 10 kann einen polygonalen Querschnitt aufweisen, und zwar einen regelmäßig oder unregelmäßig polygonalen Querschnitt. Hierbei kann es sich bevorzugt um ein so genanntes konvexes Polygon handeln, wobei der von jeweils zwei benachbarten Polygonseiten eingeschlossene Winkel unter 180° liegt. Alternativ kann es sich aber auch um ein so genanntes konkaves Polygon handeln, wozu beispielhaft auf die Figuren 8 und 9 verwiesen wird. Hierbei beträgt zumindest ein von zwei Polygonseiten eingeschlossener Winkel über 180°. In den bevorzugten Ausführungen gemäß Fig. 1 bis 3 einerseits und Fig. 4 bis 7 andererseits weist der Einsenkabschnitt 10 einen quadratischen Querschnitt auf. Der Querschnitt kann aber auch rautenförmig, parallelogrammartig oder auch oval sein.

Durch die erfindungsgemäße Ausgestaltung weist der Einsenkabschnitt 10 Seitenkanten 12 auf, die geradlinig und schräg mit dem Einsenkwinkel β zur Schraubenachse X verlaufen. Vorzugsweise liegt der Einsenkwinkel β in einem Bereich zwischen 20° und 50°. Die Höhe des Einsenkabschnittes 10 ist abhängig von der Steigung P der Gewindegänge. Je härter und dichter das Material desto höher der Einsenkabschnitt 10. Bei weicheren Werkstoffen beträgt die Höhe ungefähr 0,5 bis 1,0 x P, bei härteren und dichteren Werkstoffen ungefähr 1,0 bis 4,0 x P. Die Seitenkanten 12 sind bevorzugt scharfkantig ausgebildet, so dass sie eine Fräswirkung zum Versenken des Schraubenkopfes 6 in das jeweilige Material besitzen. Dies verhindert zum Beispiel ein Spleißen des Materials beim Einsenken des Schraubkopfes 6 und erleichtert das vollständige Einsenken des Schraubkopfes 6. Grundsätzlich können die Seitenkanten 12 auch leicht verrundet sein.

Wie beispielhaft in Fig. 10 dargestellt ist, können die Seitenkanten 12 des Einsenkabschnittes 10 auch eine zahnartige Verlaufskontur aufweisen. Dies kann beispielsweise durch einen treppenartigen Verlauf erreicht werden.

Bei den dargestellten Ausführungsbeispielen ist weiter bevorzugt vorgesehen, dass sich auf der von dem Schraubenschaft 2 wegweisenden Seite des Schraubenkopfes 6 oberhalb des Einsenkabschnittes 10 ein Kopfendabschnitt 14 angeordnet ist, der einen in axialer Richtung etwa konstanten Querschnitt besitzt. Bei der Ausführung gemäß Fig. 1 bis 3 entspricht der Querschnitt des Kopfendabschnittes 14 dem größten Querschnitt des Einsenkabschnittes 10. Bei der Ausführungsvariante gemäß Fig. 4 bis 7 weist der Kopfendabschnitt 14 einen kreisförmigen Querschnitt auf, der vorzugsweise einen Umkreis des größten Querschnittes des Einsenkabschnittes 10 bildet oder geringfügig größer ist. Die axiale Länge H' des Kopfendabschnittes 14 kann z. B. 10 bis 70 % der axialen Lände H des Einsenkabschnittes 10 betragen. In einer anderen Ausführungsform kann der Schraubenkopf 6 auch keinen Kopfendabschnitt 14 aufweisen, so dass der Kraftangriff 8 in der äußeren Stirnfläche des Einsenkbereiches 10 angeordnet ist.

Bei den bevorzugten Ausführungen gemäß Fig. 1 bis 7, wobei der Einsenkabschnitt 10 einen regelmäßig polygonalen Querschnitt aufweist, ist gemäß Fig. 7 vorgesehen, dass jeder Eckbereich des Polygons symmetrisch zur Radialen ausgebildet ist. Dies bedeutet, dass die beiden beidseitig der Radialen zwischen dieser und den angrenzenden Seitenflächen gebildeten Winkel α₁ und α₂ gleich groß sind. Der in Eindrehrichtung (Pfeil 16) weisende Winkel α₁ ist gleich dem in Löserichtung (Pfeil 18) weisenden Winkel α₂.

In Fig. 8 und 9 sind besondere Ausführungen beispielhaft dargestellt, wobei die besagten Winkel α₁ und α₂ asymmetrisch, d. h. ungleich ausgebildet sind. Gemäß Fig. 8 ist der in Eindrehrichtung 16 weisende Winkel α₁ kleiner als der andere Winkel α₂. Diese Ausführung führt zu einer erhöhten Fräswirkung beim Eindrehen. Bei der Alternative gemäß Fig. 9 ist der in Eindrehrichtung 16 weisende Winkel α₁ größer als der andere Winkel α₂. Diese Ausführung bewirkt einen größeren Lösewiderstand in Löserichtung 18.

Was die weitere Ausgestaltung der Schraube 1 betrifft, so weist der Schraubenschaft 2 z. B. ausgehend von der Schraubenspitze 4 zumindest teilweise auf einem insbesondere zylindrischen Kern 20 ein gewindeformendes ein- oder mehrgängiges Gewinde 22 auf. Bevorzugt verläuft das Gewinde 22 über die Schraubenspitze 4 hinweg bis zu deren spitzem äußeren Ende 24. Bei den dargestellten Ausführungen ist das Gewinde 22 als so genanntes Vollgewinde ausgebildet, was bedeutet, dass das Gewinde 22 über den gesamten Kern 20 hinweg bis zum Beginn des Einsenkabschnittes 10 verläuft. Alternativ dazu kann die erfindungsgemäße Schraube 1 aber auch als Teilgewindeschraube ausgebildet sein, wobei im Anschluss an den Einsenkabschnitt 10 ein gewindefreier Abschnitt des Schraubenschaftes 2 vorgesehen ist. Es liegt ebenfalls im Rahmen der Erfindung, wenn der Schraubenschaft z. B. über einen Teil seiner Länge im Querschnitt polygonförmig ist. Auch kann der Schraubenschaft über einen Teil seiner Länge am Umfang verteilt einen oder mehrere rippenartige Vorsprünge aufweisen, die in Schraubenlängsrichtung verlaufen, deren Rippenhöhe geringer ist als die Höhe der Gewindegänge. Diese Vorsprünge können im Querschnitt dreieckförmig sein und Schneid- oder Fräsrippen bilden oder sie wirken nur materialverdrängend.

In weiterer bevorzugter Ausgestaltung weist die Schraubenspitze 4 einen Kern 26 mit einem axial in Richtung des Schraubenschaftes 2 zunehmenden, polygonalen Querschnitt auf. Vorzugsweise handelt es sich auch hier insbesondere um einen quadratischen Querschnitt, was zu einer pyramidenförmigen Ausgestaltung des Kerns 26 führt. Der größte Querschnitt des Kerns 26 der Schraubenspitze 4 definiert einen Umkreis, dessen Durchmesser vorzugsweise größer ist als der Durchmesser des Kerns 20 des Schraubenschaftes 2 aber kleiner ist als der Durchmesser des Gewindes 22.

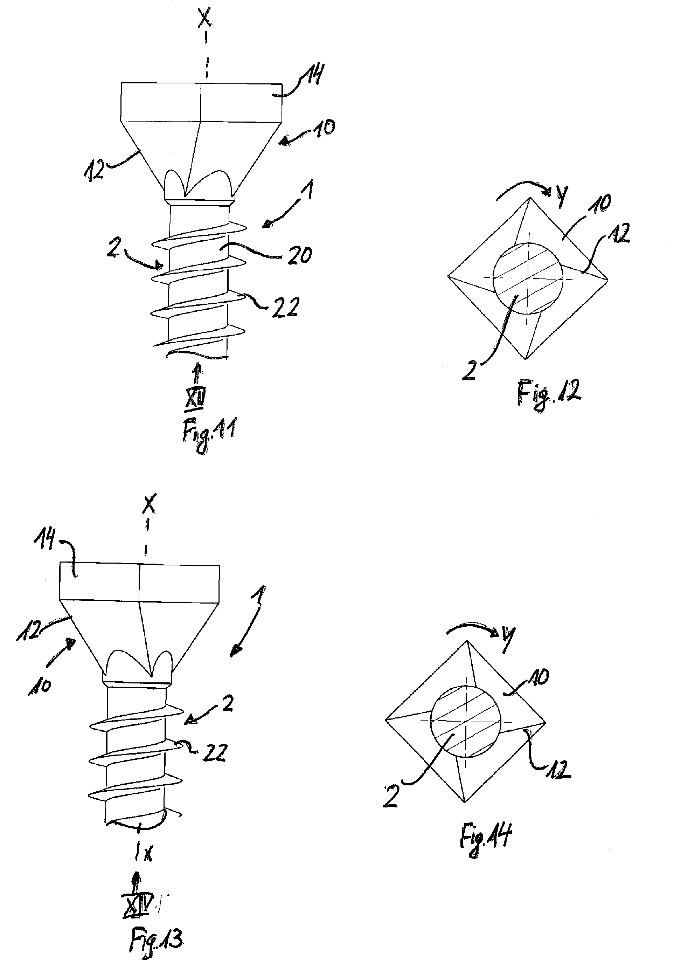

In den Fig. 11 bis 14 sind weitere Ausführungen einer erfindungsgemäßen Schraube dargestellt, und zwar weisen diese Schrauben einen modifizierten Einsenkabschnitt 10 auf. Wie in den Fig. 11 und 12 dargestellt ist, kann der Einsenkabschnitt 10 derart unter Beibehaltung eines polygonen, insbesondere quadratischen Querschnitts in Richtung der Schraubenlängsachse X um diese herum in sich tordiert, d. h. verdreht sein. Diese in sich Verdrehung kann, wie in den Fig. 11 und 12 dargestellt ist, in Eindrehrichtung Y der Schraube ausgebildet sein. In den Fig. 13 und 14 ist hierzu alternativ der Einsenkabschnitt 10 in Richtung der Schraubenlängsachse X um diese herum entgegen der Eindrehrichtung Y in sich verdreht. Bei diesen Ausführungen sind die in Richtung der Längsachse X hintereinander liegenden Polygon-Querschnitte des Einsenkabschnittes 10 beginnend am Schraubenschaft 2 jeweils gegeneinander um ein bestimmtes Drehwinkelmaß um die Längsachse X verdreht, und zwar in den Fig. 11 und 12, wie bereits ausgeführt, in Eindrehrichtung Y und in den Fig. 13 und 14 entgegen der Eindrehrichtung Y. Die jeweilige Verdrehung der einzelnen Polygon-Querschnitte zueinander kann mit einem jeweils konstanten Betrag des Maßes der Drehwinkelveränderung oder einem zunehmenden Betrag der Drehwinkelveränderung erfolgen. Im Übrigen entspricht die Ausbildung der Schraube gemäß den Fig. 11 bis 14 der Darstellung in den Fig. 1 und 2.

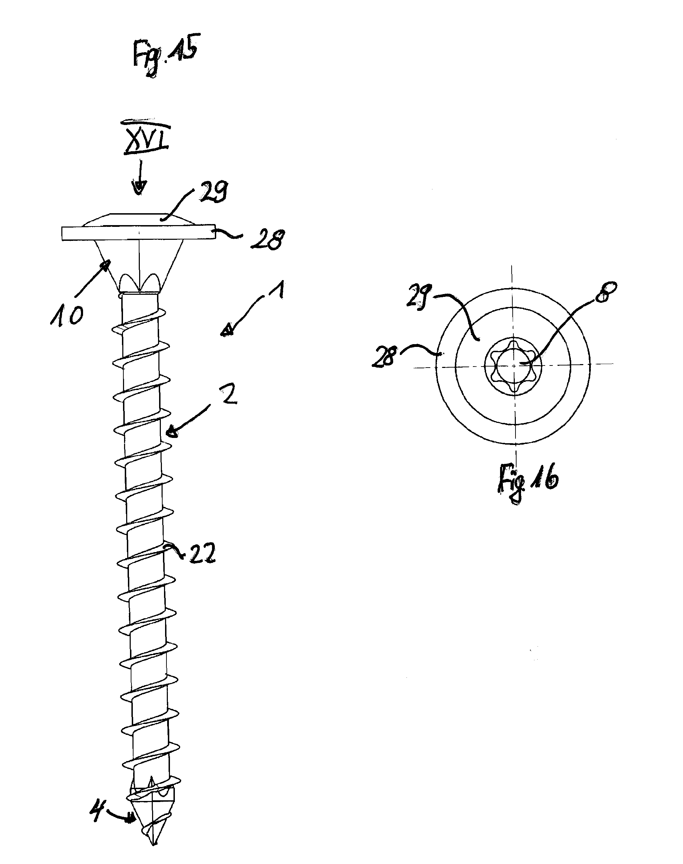

In den Fig. 15 und 16 ist eine weitere Ausbildung einer erfindungsgemäßen Schraube dargestellt. Bei dieser Schraube ist am äußeren Ende des Einsenkabschnittes 10 ein scheibenförmiger Kopfabschnitt 28 vorhanden, wobei der Durchmesser der kreisförmig ausgebildeten Scheibe größer ist als ein Durchmesser eines Umfangskreises um den größten Querschnitt des im Querschnitt polygonalen Einsenkabschnittes 10. Eine derartige Ausführungsform wird zum Beispiel verwendet, wenn ein vollständiges Einsenken der Schraube in das Material aus optischen Gründen nicht erwünscht wird. Der Kreisdurchmesser des scheibenförmigen Kopfabschnittes 28 beträgt z. B. 120 bis 250 % des Durchmessers des Umfangskreises um den größten polygonalen Querschnitt des Einsenkabschnittes. Auf dem kreisförmigen Kopfabschnitt 28 ist mittig und konzentrisch zu diesem eine konvexe Erhebung 29 ausgebildet. Mittig in dieser konvexen Erhebung 29 ist der Kraftangriff 28 eingeformt. Je nach Ausführungsform des Kraftangriffes, insbesondere der Tiefe und der Breite, muss der Durchmesser des Schraubenschaftes 2 im an den Kopfabschnitt 28 anliegenden Bereich größer sein als der Kerndurchmesser des Schraubenschaftes. Diese Durchmesservergrößerung kann beim Einschrauben in das Material zu einem Spließen des Materials führen, Um dies zu verhindern wird dieser Bereich ebenfalls als ein Einsenkabschnitt 10 ausgebildet, so dass die bereits oben beschriebene Fräswirkung des Einsenkabschnitts 10 ein Spließen des Materials verhindert. Die Dicke des Kopfabschnittes 28 beträgt z.B. 20 bis 80 % der axialen Länge des Einsenkabschnittes 10 und die maximale Höhe der Erhebung 29 entspricht z. B. der Dicke des Kopfabschnittes 28. Im Übrigen entspricht die Ausbildung dieser erfindungsgemäßen Schraube derjenigen, wie sie in den Fig. 1 und 2 dargestellt ist.

Was noch den eingangs allgemein erwähnten Kraftangriff 8 betrifft, so ist dieser bevorzugt als Innenkraftangriff in Form einer axialen Vertiefung des Schraubenkopfes 6 ausgebildet, wobei die Vertiefung einen von der Kreisform abweichenden Querschnitt aufweist. In den dargestellten, bevorzugten Ausführungen handelt es sich um einen so genannten Innenstern, der Kraftangriff 8 kann aber auch als Schlitz, Kreuzschlitz, Innensechskant oder dergleichen ausgebildet sein.

Abschließend sollen noch beispielhaft einige Maße einer konkreten Ausführung der erfindungsgemäßen Schraube 1 angegeben werden. So kann das Gewinde 22 mit einem Gewindeaußendurchmesser (Nenndurchmesser) D_{G} von 4,5 mm ausgebildet sein. Gemäß Fig. 3 beträgt hierbei die Diagonale D des erfindungsgemäßen Einsenkabschnittes 10 etwa 7 mm. Daraus resultiert eine Seitenlänge S von etwa 5 mm. Die axial gemessene Länge bzw. Höhe H des Einsenkabschnittes 10 liegt hierbei im Bereich von 2,5 bis 3,5 mm. Der optionale Kopfendabschnitt 14 kann mit einer axial gemessenen Dicke bzw. Höhe H' von etwa 1,5 mm ausgebildet sein. Daraus resultiert eine Gesamtlänge des Schraubenkopfes 6 im Bereich von etwa 4 bis 5 mm. Bei der Ausführung gemäß Fig. 4 bis 7 weist der kreisförmige Kopfendabschnitt 14 einen Durchmesser von 7 bis etwa 7,5 mm auf.

Diese genannten Bemessungen insbesondere im Bereich des erfindungsgemäßen Einsenkabschnittes 10 und die sich daraus ergebenden Verhältnisse beispielsweise bezogen auf den Gewinde-Nenndurchmesser D_{G} bewirken ein besonders gutes Einsenken des Schraubenkopfes 6 beim Eindrehen auch in harte Bauplatten.

Es sei noch erwähnt, dass der Einsenkabschnitt 10 außer dem dargestellten viereckigen Querschnitt auch einen dreieckigen oder beliebig mehreckigen, beispielsweise fünfeckigen Querschnitt aufweisen kann. Eine Ausführung mit zumindest viereckigem Querschnitt ist aber für die Unterbringung des Innenkraftangriffes 8 von Vorteil im Vergleich zu einem dreieckigen Querschnitt.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Schraube (1) zum Befestigen von Bauplatten, insbesondere zementgebundenen Faserplatten ohne Vorbohren, mit einem Schraubenschaft (2) an dessen einem Ende eine Schraubenspitze (4) und am anderen Ende ein Schraubenkopf (6) mit einem Kraftangriff (8) für ein Drehwerkzeug vorhanden ist sowie mit einem auf dem Schraubenschaft (2) ausgebildeten Gewinde (22), **dadurch gekennzeichnet, dass** der Schraubenkopf (6) ausgehend von dem Schraubenschaft (2) einen Einsenkabschnitt (10) mit einem zu seinem von der Schraubenspitze (4) abgewandten Ende hin größer werdenden polygonalen Querschnitt bildet.

2. Schraube nach Anspruch 1,
**dadurch gekennzeichnet, dass** der Einsenkabschnitt (10) einen regelmäßig polygonalen Querschnitt aufweist.

3. Schraube nach Anspruch 2,
**dadurch gekennzeichnet, dass** der Einsenkabschnitt (10) im Anschluss an den Schraubenschaft (2) umgekehrt pyramidenstumpfförmig ausgebildet ist.

4. Schraube nach Anspruch 1 oder 2,
**dadurch gekennzeichnet, dass** der Einsenkabschnitt (10) scharfkantige oder verrundete Seitenkanten (12) aufweist, die etwa geradlinig und schräg zur Schraubenachse (X) verlaufen.

5. Schraube nach Anspruch 1 oder 2,
**dadurch gekennzeichnet, dass** der Einsenkabschnitt (10) Seitenkanten (12) mit einer zahnartigen Verlaufskontur aufweist.

6. Schraube nach einem der Ansprüche 1 oder 3,
**dadurch gekennzeichnet, dass** sich auf der von dem Schraubenschaft (2) wegweisenden Seite des Schraubenkopfes (6) an den Einsenkabschnitt (10) ein kurzer Kopfendabschnitt (14) mit einem in axialer Richtung des Schraubenschaftes (2) konstantem Querschnitt anschließt.

7. Schraube nach Anspruch 6,
**dadurch gekennzeichnet, dass** der Querschnitt des Kopfendabschnittes (14) dem größten Querschnitt des Einsenkabschnittes (10) entspricht.

8. Schraube nach Anspruch 6,
**dadurch gekennzeichnet, dass** der Kopfendabschnitt (14) einen kreisförmigen Querschnitt aufweist, der vorzugsweise einen Umkreis des Querschnitts des Einsenkabschnittes (10) bildet.

9. Schraube nach Anspruch 1 oder 2,
**dadurch gekennzeichnet, dass** der Schraubenschaft (2) ausgehend von der Schraubenspitze (4) zumindest teilweise ein selbstschneidendes oder gewindeformendes Gewinde (22) aufweist.

10. Schraube nach Anspruch 9,
**dadurch gekennzeichnet, dass** das Gewinde (22) über die Schraubenspitze (4) hinweg bis zu deren äußerem Ende (24) verläuft.

11. Schraube nach Anspruch 1 oder 2,
**dadurch gekennzeichnet, dass** die Schraubenspitze (4) einen Kern (26) mit einem von derem äußerem Ende aus in Längsrichtung des Schraubenschaftes (2) größer werdenden, polygonalen Querschnitt aufweist.

12. Schraube nach Anspruch 1 oder 3,
**dadurch gekennzeichnet, dass** der Einsenkabschnitt (10) in Richtung der Schraubenlängsachse (X) um diese herum in sich tordiert ausgebildet ist.

13. Schraube nach Anspruch 1 oder 3,
**dadurch gekennzeichnet, dass** auf der von dem Schraubenschaft (2) weg weisenden Seite des Schraubenkopfes (6) oberhalb des Einsenkabschnittes (10) ein scheibenförmiger Kopfabschnitt (28) vorhanden ist, wobei dessen Durchmesser größer ist als der Durchmesser eines Umfangskreises um einen größten Querschnitt des Einsenkabschnittes (10).

14. Schraube nach Anspruch 1 oder 3,
**dadurch gekennzeichnet, dass** der Kraftangriff (8) als Innenkraftangriff, wie Schlitz, Kreuzschlitz, Innensechskant oder Innenstern ausgebildet ist.

15. Schraube nach Anspruch 1 oder 3,
**dadurch gekennzeichnet, dass** die Seitenkanten (12) des Einsenkabschnittes (10) schräg mit dem Einsenkwinkel (β) zur Schraubenachse (X) verlaufen, insbesondere mit einem Einsenkwinkel (β) zwischen 20° und 50°.

16. Schraube nach Anspruch 1 oder 3,
**dadurch gekennzeichnet, dass** die Höhe des Einsenkabschnittes (10) zwischen 0,5 bis 4,0 x der Steigung (P) der Gewindegänge beträgt.
